# EUROPÄISCHE PATENTSCHRIFT

(11) **EP 0 386 468 B1**
(45) Veröffentlichungstag und Bekanntmachung des Hinweises auf die Patenterteilung: **01.09.1993**
(21) Anmeldenummer: 90102170.9
(22) Anmeldetag: 03.02.1990
(51) Int. Cl.: F03B 11/00, F04D 29/04

(54) **Turbomaschine mit Stirnradgetriebe**
Turbine with a gear transmission
Turbine à transmission par engrenages

(30) Priorität: 04.03.1989 DE 3907068
(43) Veröffentlichungstag der Anmeldung: 12.09.1990
(73) Patentinhaber: ATLAS COPCO ENERGAS GMBH, D-50971 Köln (DE)
(72) Erfinder: Bosen, Werner, D-5000 Köln 90 (DE); Denz, Hans-Dieter, D-5354 Weilersswist-Metternich (DE)
(74) Vertreter: Andrejewski, Walter

(56) Entgegenhaltungen:
- FR-A- 1 198 181
- US-A- 4 687 411

## Beschreibung

Die Erfindung bezieht sich gattungsgemäß auf eine Turbomaschine mit fliegend angeordnetem Laufrad und Stirnradgetriebe mit Getriebegehäuse, langsamlaufendem Stirnrad sowie schnelllaufendem Ritzel, das mit dem Stirnrad im Eingriff steht.

Bei den aus der Praxis bekannten Turbomaschinen, von denen die Erfindung ausgeht, sind das Laufrad und das Ritzel auf einer gemeinsamen Abtriebswelle fest angeordnet. Die Abtriebswelle ist am Gehäuse gelagert, und zwar an Lagerstellen beidseits des Ritzels (z.B. US-A-4 687 411). Eine solche Lagerung hat einen beachtlichen Platzbedarf und bedingt aufwendige Detailkonstruktionen. Nachteilig ist ferner, daß die bekannten Anordnungen bei vorgegebener Betriebsdrehzahl, vorgegebenem Gewicht und Massenträgheit des Laufrades nur noch sehr geringe konstruktive Möglichkeiten zulassen, um die Lage der kritischen Drehzahlen zu beeinflussen. Dies führt zu beachtlichen Zwängen bei der konstruktiven Gestaltung der Turbomaschine. Die bekannten Turbomaschinen, insbesondere radialer Bauart, arbeiten in der Praxis im überkritischen Betrieb, verbunden mit hohen Lager-Umfangsgeschwindigkeiten. Bei der überkritischen Betriebsweise, verbunden mit hohen Lager-Umfangsgeschwindigkeiten, kann eine ausreichende Lebensdauer des Stirnradgetriebes nur dann gewährleistet werden, wenn ölgeschmierte und ölgekühlte Gleitlager für die Lagerung der Abtriebswelle verwendet werden. Ölgeschmierte Gleitlager erzeugen bei den in Turbomaschinen erforderlichen großen Umfangsgeschwindigkeiten erhebliche Reibverlustleistungen, die einerseits den Wirkungsgrad des Stirnradgetriebes und damit der gesamten Turbomaschine negativ beeinflussen und andererseits eine aufwendige Kühl- und Schmierölversorgung nach sich ziehen.

Der Erfindung liegt die Aufgabe zugrunde, eine Turbomaschine des beschriebenen Aufbaus zu schaffen, die sich durch eine einfache und kompakte Bauweise auszeichnet und vor allem ohne Änderung des konstruktiven Aufbaus insgesamt auf einfache Weise eine konstruktive Beeinflussung der kritischen Drehzahlen möglich macht.

Die Aufgabe wird erfindungsgemäß gelöst durch eine Turbomaschine mit fliegend angeordnetem Laufrad und Stirnradgetriebe mit Getriebegehäuse, langsamlaufendem Stirnrad sowie schnelllaufendem Ritzel, das mit dem Stirnrad in Eingriff steht, wobei das Ritzel und das Laufrad miteinander zu einem Nabenrotor verbunden sind und an einem vorstehenden, an dem Getriebegehäuse befestigten Lagerzapfen drehbar gelagert sind, wobei ein erstes Lager im Bereich des Ritzels angeordnet ist und wobei ein zweites Lager mit einem Lagerabstand von einer Einspannstelle des Lagerzapfens angeordnet ist, der das 0,4-bis 1,2-fache des ebenfalls von der Einspannstelle des Lagerzapfens aus gemessenen Schwerpunktabstandes des Nabenrotor-Schwerpunktes beträgt. - Bei vorgegebener Betriebsdrehzahl sind die kritischen Drehzahlen durch die Abmessungen des am Getriebegehäuse befestigten Lagerzapfens sowie des Nabenrotors (Länge, Wandstärke, Durchmesser) veränderbar. Im übrigen besteht die Möglichkeit, durch die Wahl des Lagerabstandes des am freien Ende des Lagerzapfens angeordneten zweiten Lagers im angegebenen, erfindungsgemäßen Bereich die kritische Drehzahl zu beeinflussen. Im Ergebnis sind die kritischen Drehzahlen bei der konstruktiven Auslegung der Turbomaschine durch einfache konstruktive Maßnahmen, die den grundsätzlichen Aufbau nicht berühren, in weiten Bereichen beeinflußbar. Aus den kritischen Drehzahlen resultierende konstruktive Zwänge sind bei der erfindungsgemäßen Turbomaschine nicht mehr gegeben. Es lassen sich akzeptable kritische Drehzahlen und Lager-Umfangsgeschwindigkeiten realisieren. Das hat zur Folge, daß anstelle der in der Praxis erforderlichen ölgeschmierten Gleitlager in verstärktem Maße Wälzlager für die Lagerung des schnellaufenden Nabenrotors einsetzbar sind. Nach einer bevorzugten Ausführungsform der Erfindung ist zumindest das dem freien Lagerzapfenende zugeordnete, im Lagerabstand LL angeordnete Lager als Wälzlager, vorzugsweise als vorgespanntes Schrägkugellager, ausgebildet, wobei der Lagerabstand LL mit den Abmessungen des Lagerzapfens und des Nabenrotors derart abgestimmt ist, daß die Betriebsdrehzahl in einem sicheren Abstand von benachbarten kritischen Drehzahlen liegt. Bei sehr hohen Betriebsdrehzahlen wird es allerdings erforderlich sein, das im Bereich des Ritzels angeordnete Lager als ölgeschmiertes Gleitlager auszubilden. Nichtsdestoweniger führt eine Ausführungsform, bei der das dem freien Lagerzapfenende zugeorndete Lager ein Wälzlager ist, zu einer beachtlichen Vereinfachung des konstruktiven Aufbaus insgesamt, was sich vorteilhaft bezüglich der Investitionskosten und Betriebskosten hinsichtlich geringerer Verlustleistungen niederschlägt. Der Nabenrotor kann auf verschiedene Weise konstruktiv verwirklicht sein. Eine konstruktiv einfache Lösung sieht vor, daß das Laufrad und das Ritzel auf einer Hohlwelle angeordnet sind, die an den auf dem Lagerzapfen angeordneten Lagern abgestützt ist. Bei sehr hohen Betriebsdrehzahlen der Turbomaschine kann es erforderlich sein, durch Minimierung der Laufradbohrung die Tangentialspannung am Bohrungsrand im zulässigen Bereich zu halten. In einem solchen Fall ist eine erfindungsgemäße Ausgestaltung vorteilhaft, bei der an das Laufrad einstückig eine Hülse angeformt ist, mit der das Ritzel unmittelbar verbunden ist. Im Rahmen dieser Ausgestaltung liegt es, das Ritzel auf die Hülse des Laufrades aufzuschieben, oder aber auch, das Ritzel im wesentlichen stirnseitig an die Hülse des Laufrades anzuschließen. Es versteht sich, daß die erfindungsgemäße Turbomaschine sowohl als Turboverdichter als auch als Expansionsturbine einsetzbar ist. Insbesondere ist die erfindungsgemäße Turbomaschine mit einem Radiallaufrad ausgerüstet.

Im folgenden wird die Erfindung anhand einer lediglich ein Ausführungsbeispiel darstellenden Zeichnung ausführlicher erläutert. Es zeigen in schematischer Darstellung
Fig. 1 einen Axialschnitt durch eine erfindungsgemäße Turbomaschine,
Fig. 2 eine weitere Ausführungsform eines erfindungsgemäßen Nabenrotors.

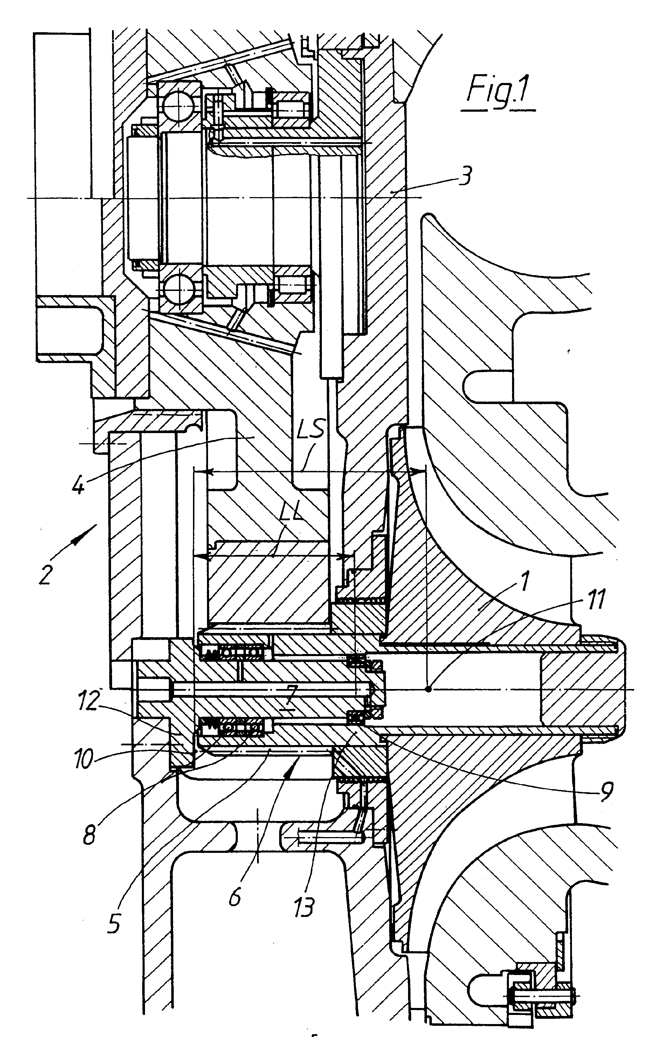

Die in der Figur 1 dargestellte Turbomaschine ist ein Turboverdichter. Zum grundsätzlichen Aufbau gehören ein fliegend angeordnetes Laufrad 1 und ein Stirnradgetriebe 2 mit Getriebegehäuse 3, langsamlaufendem Stirnrad 4 sowie schnellaufendem Ritzel 5, das mit dem Stirnrad 4 im Eingriff steht. Das Ritzel 5 und das Laufrad 1 sind miteinander zu einem Nabenrotor 6 verbunden. Der Nabenrotor 6 ist an einem vorstehenden, an dem Getriebegehäuse 3 befestigten Lagerzapfen 7 drehbar gelagert. Ein erstes Lager 8 ist im Bereich des Ritzels 5 angeordnet. Ein zweites Lager 9 ist mit einem Lagerabstand LL von der Einspannstelle 10 des Lagerzapfens 7 angeordnet, wobei der Lagerabstand LL das 0,4- bis 1,2-fache des ebenfalls von der Einspannstelle 10 des Lagerzapfens 7 aus gemessenen Schwerpunktabstandes LS des Nabenrotor-Schwerpunktes 11 beträgt. Wenn der Lagerzapfen 7 - wie im Ausführungsbeispiel - mit einem Anschlußflansch 12 ausgebildet ist, dann meint Einspannstelle die Stelle, an der der Lagerzapfen 7 in den Anschlußflansch 12 übergeht. Schwerpunktabstand bezeichnet den Abstand des Massenschwerpunktes des Nabenrotors 6 von der Einspannstelle 10. Lager meint stets eine Lagerstelle, die beispielsweise auch zwei nebeneinander angeordnete Wälzlager aufweisen kann.

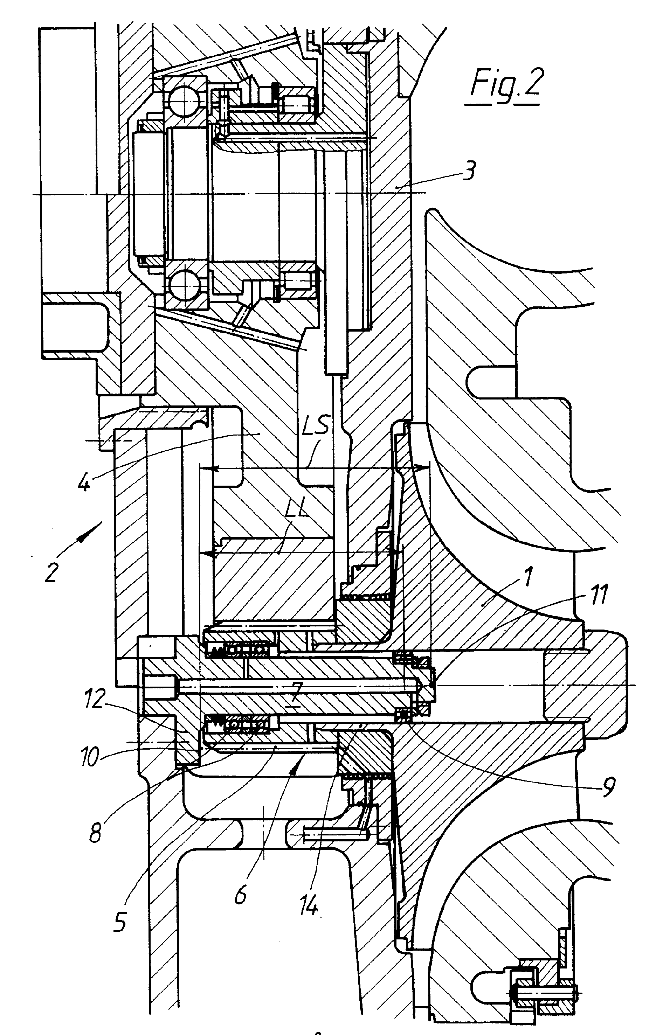

Im Rahmen der Erfindung liegt es, die Lager 8, 9 auch als ölgeschmierte und ölgekühlte Gleitlager auszubilden. Die bevorzugte Ausführungsform sieht jedoch vor, daß zumindest das im Lagerabstand LL angeordnete Lager 9 als Wälzlager ausgebildet ist und daß der Lagerabstand LL mit den Abmessungen des Lagerzapfens 7 und des Nabenrotors 6 derart abgestimmt ist, daß die Betriebsdrehzahl in einem sicheren Abstand von benachbarten kritischen Drehzahlen liegt. Im Ermessen des Konstrukteurs liegt es, das im Bereich des Ritzels 5 angeordnete Lager 8 weiterhin als ölgeschmiertes Gleitlager auszubilden. Im Ausführungsbeispiel, das eine sehr einfache und daher vorteilhafte Ausgestaltung der Erfindung zeigt, werden zur Lagerung des Nabenrotors 6 ausschließlich Wälzlager verwendet. Dabei handelt es sich um vorgespannte Schrägkugellager (Spindellager), also Präzisionskugellager mit geringer Lagerluft, die in axialer Richtung vorgespannt sind und dadurch gleichsam spielfrei laufen. Der Nabenrotor 6 ist im Ausführungsbeispiel konstruktiv dadurch verwirklicht, daß das Laufrad 1 und das Ritzel 5 auf einer Hohlwelle 13 abgestützt sind, die an den Wälzlagern 8, 9 abgestützt ist. Im Rahmen der Erfindung liegt es aber auch, an das Laufrad 1 eine Hülse 14 anzuformen, mit der das Ritzel 5 unmittelbar verbunden ist (Fig. 2).

Nach bevorzugter Ausführungsform ist das Laufrad ein Radialläufer. Es versteht sich, daß die erfindungsgemäße Turbomaschine nicht nur gemäß dem Ausführungsbeispiel als Turboverdichter sondern auch als Expansionsturbine einsetzbar ist.

## Patentansprüche

1. Stirnradgetriebe für eine Turbomaschine, - mit Getriebegehäuse (3), Stirnrad (4) und Ritzel (5), wobei das Ritzel (5) mit dem Stirnrad (4) kämmt und wellenseitig auf ein Laufrad (1) arbeitet, welches außerhalb des Getriebegehäuses (3) angeordnet und freifliegend gelagert ist, **dadurch gekennzeichnet**,
daß das Ritzel (5) mit dem Laufrad (1) zu einem Nabenrotor (6) vereinigt ist, wobei der Nabenrotor (6) eine Lagerbohrung aufweist,
daß an dem Getriebegehäuse (3) ein vorstehender und in die Lagerbohrung eingreifender Lagerzapfen (7) befestigt ist und
daß in der Lagerbohrung zwischen Nabenrotor (6) und Lagerzapfen (7) ein erstes Lager (8) im Bereich des Ritzels (5) sowie mit größerem Lagerabstand (LL) von dem gehäuseseitigen Zapfenanschluß (10) des an die Lagerbohrung angepaßten Lagerzapfens (7) ein zweites Lager (9) angeordnet sind,
wobei der Lagerabstand (LL) des zweiten Lagers (9) in einem Bereich, der das 0,4 bis 1, 2-fache des ebenfalls von dem Zapfenanschluß (10) aus gemessenen Schwerpunktabstandes (LS) des Nabenrotor-Schwerpunktes (11) beträgt, festlegbar ist mit der Maßgabe, daß die Betriebsdrehzahl in einem sicheren Abstand von benachbarten kritischen Drehzahlen liegt.

2. Stirnradgetriebe nach Anspruch 1, dadurch gekennzeichnet, daß zumindest das im Lagerabstand (LL) angeordnete zweite Lager (9) als Wälzlager, vorzugsweise als vorgespanntes Schrägkugellager, ausgebildet ist.

3. Stirnradgetriebe nach Anspruch 1 oder 2, dadurch gekennzeichnet, daß das Laufrad (1) und das Ritzel (5) auf einer Hohlwelle (13) angeordnet sind, die an den Lagern (8, 9) abgestützt ist.

4. Stirnradgetriebe nach Anspruch 1 oder 2, dadurch gekennzeichnet, daß an dem Laufrad (1) eine Hülse angeformt ist, mit der das Ritzel (5) unmittelbar verbunden ist.

## Claims

1. A spur gear for a turbomachine, comprising a gearbox (3), a spur gear (4) and a pinion (5), the pinion (5) meshing with the spur gear (4) and outputting on the shaft side to a rotor (1) disposed and overhang-mounted outside the gearbox (3), characterised in that
the pinion (5) is combined with the rotor (1) to form a hub rotor (6), the latter having a bearing bore,
in that a projecting journal (7) engaging in the bearing bore is fixed on the gearbox (3) and
in that there is disposed in the bearing bore between the hub rotor (6) and the journal (7) a first bearing (8) in the region of the pinion (5), and a second bearing (9) is disposed with larger spacing (LL) from the place (10) where the journal (7) adapted to the bearing bore adjoins the gearbox,
the spacing (LL) of the second bearing (9) being adjustable in a range equal to 0.4 to 1.2 times the spacing (LS) of the centre of gravity (11) of the hub rotor again as measured from the place (10) where the journal adjoins the gearbox, subject to the operating speed being at a safe distance from adjacent critical speeds.

2. A spur gear according to claim 1, characterised in that at least the second bearing (9) disposed with the bearing spacing (LL) is constructed as a rolling bearing, preferably as a prestressed angular contact ball bearing.

3. A spur gear according to claim 1 or 2, characterised in that the rotor (1) and the pinion (5) are disposed on a hollow shaft (13) supported on the bearings (8, 9).

4. A spur gear according to claim 1 or 2, characterised in that a sleeve to which the pinion (5) is directly connected is formed integrally on the rotor (1).

## Revendications

1. Engrenage à roue droite pour une turbomachine, - comportant un carter (3), une roue droite (4) et un pignon (5), le pignon (5) engrenant avec la roue droite (4) et agissant, du côté de l'arbre, sur une couronne mobile (1), qui est disposée à l'extérieur du carter (3) de l'engrenage et est supportée en porte-à-faux, caractérisé en ce que :
- le pignon (5) est réuni à la couronne mobile (1) pour former un rotor formant moyeu (6), ce dernier comportant un alésage de palier,
- un tourillon saillant (7), qui pénètre dans l'alésage de palier, est fixé au carter (3) de l'engrenage, et
- dans l'alésage de palier, un premier palier (8) est disposé entre le rotor formant moyeu (6) et le tourillon (7), au voisinage du pignon (5), et un second palier (9) est installé à une distance (LL) du raccord (10), situé côté carter, du tourillon (7) ajusté dans l'alésage de palier,
la distance (LL), à laquelle est situé le second palier (9) pouvant être réglée dans une gamme, qui est comprise entre 0,4 et 1,2 fois la distance (LS) du centre de gravité (11) du rotor formant moyeu, également mesurée à partir du raccord (10) du tourillon, avec la condition selon laquelle la vitesse de rotation de service est séparée, d'un écart sûr, de vitesses de rotation critiques voisines.

2. Transmission à roue droite selon la revendication 1, caractérisée en ce qu'au moins le second palier (9) situé à la distance (LL) est agencé sous la forme d'un roulement, de préférence un roulement à billes à disposition oblique, précontraint.

3. Engrenage à roue droite selon la revendication 1 ou 2, caractérisé en ce que la couronne mobile (1) et le pignon (5) sont disposés sur un arbre creux (13), qui prend appui sur les paliers (8,9).

4. Engrenage à roue droite selon la revendication 1 ou 2, caractérisé en ce que sur la couronne mobile (1) est formée une douille, à laquelle le pignon (5) est raccordé directement.
